# EUROPEAN PATENT APPLICATION

(11) **EP 2 023 236 A2**
(43) Date of publication of application: **11.02.2009**
(21) Application number: 08161835.7
(22) Date of filing: 05.08.2008
(51) Int. Cl.: G06F 3/048

(54) **Processing execution program product and processing execution apparatus**

(30) Priority: 06.08.2007 JP 2007204454
(71) Applicant: Nikon Corporation, Tokyo 100-8331 (JP)
(72) Inventor: Hayashi, Nobuhiro, Chiyoda-ku Tokyo 100-8331 (JP); Kuwata, Hiromi, Chiyoda-ku Tokyo 100-8331 (JP)
(74) Representative: Walaski, Jan Filip

(57) **Abstract**

A computer readable computer program product containing a processing execution program, the processing execution program includes: an area display instruction to display, in correlation to data displayed on a screen, a selection area to be operated by a user for selecting the data; a selection status display instruction to display a selection status indication indicating that the data has been selected in the selection area; a processing execution instruction to execute the processing to the data corresponding to the selection area in which the selection status indication is displayed; and an execution status display instruction to display an execution status indication on the processing in place of the selection status indication in the selection area.

## Description

The disclosure of the following priority application is herein incorporated by reference: Japanese Patent Application No. 2007-204454 filed August 6, 2007.

The present invention relates to a processing execution program product and a processing execution apparatus for executing processing of data.

Japanese Patent Laid-Open Patent Application No. 2000-215036 discloses a method for displaying status of program operations. According to this method, a display content of an icon varies according to progress of the processing.

The conventional method of varying the display contents of icons has a problem in that an area to accept instruction to select processing and an icon have to be displayed separately on a screen, so that there occurs a waste space on the screen.

According to the first aspect of the present invention, a computer readable computer program product contains a processing execution program,which comprises:an area display instruction to display, in correlation to data displayed on a screen, a selection area to be operated by a user for selecting the data; a selection status display instruction to display a selection status indication indicating that the data has been selected in the selection area; a processing execution instruction to execute theprocessing to the data corresponding to the selection area in which the selection status indication is displayed; and an execution status display instruction to display an execution status indication on the processing in place of the selection status indication in the selection area.

According to the second aspect of the present invention, in the processing execution program product according to the first aspect, it is preferred that the processing execution program further comprises: a processing control instruction to control the processing on the data corresponding to the selection area to be changed according to a display content of the selection area when the selection area is operated by the user.

According to the third aspect of the present invention, in the processing execution program product according to the second aspect, it is preferred that the processing control instruction controls the processing according to the processing execution instruction to be changed such that when the display content of the selection area indicates that the data corresponding to the selection area is not selected, and if the selection area is operated by the user, the data corresponding to the selection area is selected.

According to the fourth aspect of the present invention, in the processing execution program product according to the second aspect or the third aspect, it is preferred that the processing control instruction controls the processing according to the processing execution instruction to be changed such that when the display content of the selection area indicates that the data corresponding to the selection area is selected, and if the selection area is operated by the user, selection of the data corresponding to the selection area is cancelled.

According to the fifth aspect of the present invention, in the processing execution program product according to any one of the second aspect through the fourth aspect, it is preferred that the processing control instruction controls theprocessing execution instruction such that when the display content of the selection area indicates that the processing execution instruction is executing the processing on the data the data corresponding to the selection area, and if the selection area is operated by the user, the processing on the data corresponding to the selection area is stopped.

According to the sixth aspect of the present invention, in the processing execution program product according to the second aspect, it is preferred that the processing control instruction controls the processing execution instruction according to theprocessing execution instruction to be changed such that when the display content of the selection area indicates that the processing on the data corresponding to the selection area has been completed, and if the selection area is operated by the user, the processing on the data corresponding to the selection area is executed again.

According to the seventh aspect of the present invention, in the processing execution program product according to any one of the first aspect through the sixth aspect, it is preferred that a display format of the selection area is a check box.

According to the eighth aspect of the present invention, a processing execution apparatus comprises: an area display control means that controls a selection area to be displayed in correlation to data displayed on a screen, the selection area being to be operated by a user for selecting the data; a selection status display control means that controls a selection status indication indicating that the data has been selected to be displayed in the selection area; a processing execution means that executes processing on the data corresponding to the selection area in which the selection status indication is displayed; and an execution status indication control means that controls such that the an execution status indication on the processing in place of the selection status indication is displayed in the selection area.

### BRIEF DESCRIPTION OF THE DRAWINGS

FIG. 1 is a block diagram showing a configuration of an image storage device according to an embodiment of the present invention;
FIG. 2 is a first diagram showing a specific example of an image list displaying screen;
FIG. 3 is a diagram showing a specific example of each mark displayed in a check box;
Each of FIG. 4A through 4E is a diagram showing a specific example of a change of the display content in the check box;
FIG. 5 is a diagram exemplifying the change of the display content in the check box according to the status of execution of processing when an image file is imported in from a digital camera wireline-connected to the image storage device;
FIG. 6 is a diagram exemplifying the change of the display content in the check box according to the status of execution of processing when an image file is imported from a digital camera wireless-connected to the image storage device;
FIG. 7 is a second diagram showing a specific example of the image list displaying screen; and
FIG. 8 is a flowchart illustrating processing to be executed in the image storage device.

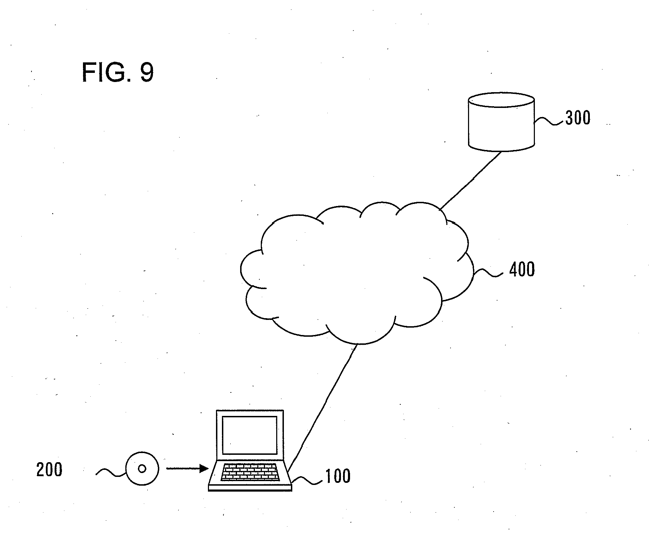

FIG. 9 illustrates how the computer program product to be used to execute the processing execution in the embodiment of the present invention, may be distributed.

### DESCRIPTION OF PREFERRED EMBODIMENTS

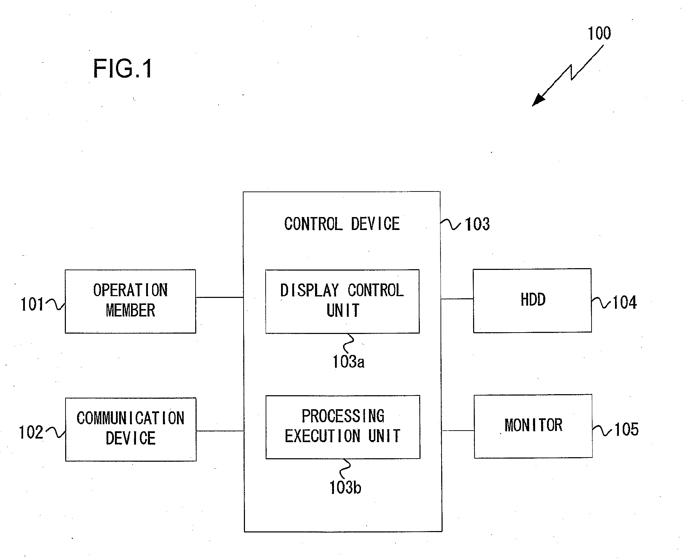

FIG. 1 is a block diagram showing a configuration of an image storage device according to an embodiment of the present invention. An image storage device 100, for example, a personal computer, includes an operation member 101, a communication device 102, a control device 103, an HDD (Hard Disk Drive) 104, and a monitor 105.

The operation member 101 includes various devices to be operated by a user, for example, a keyboard and a mouse. The communication device 102 is a device to communicate with an external device through a wireline connection or a wireless connection.

The communication device 102 that can be used includes, for example, a USB interface for wireline-connecting the external device through a USB cable and a wireless LAN interface for wireless-connecting the external device through a wireless LAN. The image storage device 100 according to the present embodiment is configured to communicate with each of a plurality of digital cameras through any of a wireline connection and a wireless connection. For example, the storage device 100 can communicate with one digital camera through a wireline connection and with another through a wireless connection.

The HDD 104 is a storage medium that stores image files imported from a digital camera through the communication device 102 and various programs to be executed by the control device 103. Themonitor 105 is, for example, a liquidcrystal monitor, which displays various pieces of information output from the control device 103.

The control device 103 includes a CPU, a memory and other peripheral circuits and is provided with a display control unit 103a and a processing execution unit 103b as logical function blocks. The memory that constitutes the control device 103 includes SDRAM and/or flash memories. SDRAM is a volatile memory, which is used as a working memory of the CPU for executing the programs or as a buffer memory for temporarily storing data therein. The flash memory is a nonvolatile memory, which stores various parameters to be read in into the CPU when programs are executed.

The image storage device 100 according to the present embodiment is configured to read in image data stored in the storage medium of the digital camera connected to thereto through the communication device 102 and store the data in the HDD 104. In the present embodiment, the image storage device 100 is described as being wireline or wireless communicated with at least one digital camera. In the case of wireless communication, the image storage device 100 and the digital camera may communicate through a wireless connection directly or through communications equipment such as an access point.

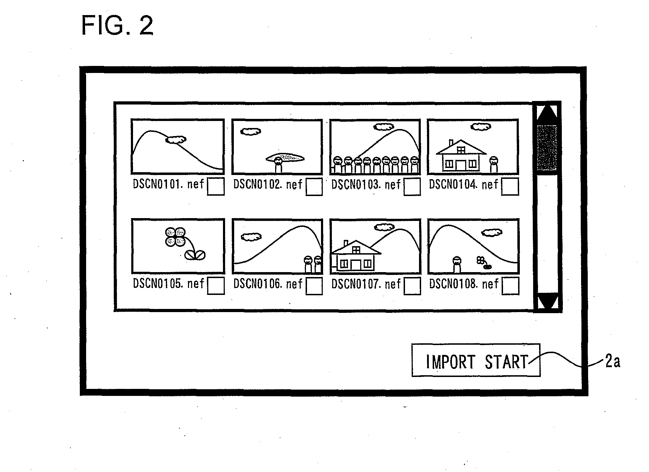

The display control unit 103a, when import of an image from the digital camera is instructed by the user, displays an image list displaying screen as shown in FIG. 2 on the monitor 105. That is, the display control unit 103a imports thumbnail images of the images stored in the storage medium in the digital camera that is currently connected and displays a list of the images on the image list displaying screen. When the image storage device 100 is connected with a plurality of digital cameras concomitantly, thumbnail images of the images stored in the storage medium of each digital camera currently connected are displayed as a list.

On the image list displaying screen, there are displayed a list of thumbnail images and file names of the images stored in the storage medium of the connected digital cameras as well as a check box for instructing by the user to select or not to select each image as an object to be imported. Also, there is displayed an import start button 2a to be operated by the user for instructing start of the import of the image selected as the object to be imported.

The user can give an instruction to select an import target image, by clicking the check box displayed on the image list displaying screen in correlation to the image with a mouse included in the operation member 101. The display control device changes a display content in the check box correlated to the image to be imported, selection of which image has been instructed by the user.

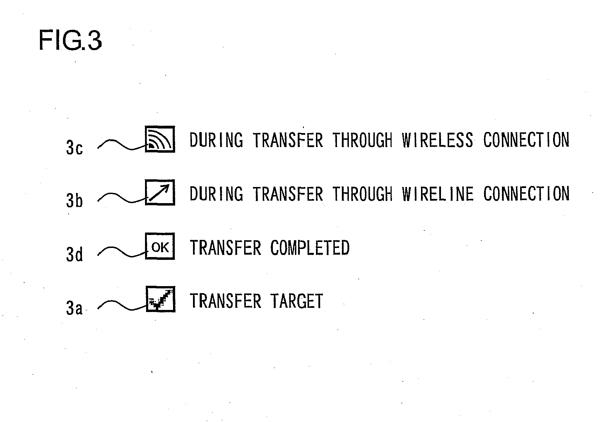

To be concrete, the display control unit 103a displays nothing in a check box corresponding to an image that is not selected by the user as an import target. The display content in the check box indicates that the corresponding image is in anon-selected state (hereinafter, referred to as "the check box being in a non-selected state"). On the contrary, when the check box is clicked with the mouse, transfer target mark 3a as shown in FIG. 3 is displayed in the check box concerned to indicate that the display content in that check box is in a selected state (hereinafter, referred to as "the check box being in a selected state"). When the check box being in a selected state is clicked by the user with the mouse, the display control unit 103a deletes the transfer target mark 3a displayed in the check box concerned to bring the check box into a non-selected state.

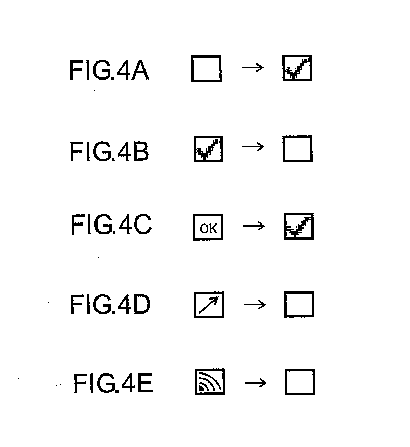

For example, the display control unit 103a, when the check box being in a non-selected state is clicked by the user as shown in FIG. 4A, brings the check box into a selected state. On the contrary, when the check box being in a selected state is clicked by the user as shown in FIG. 4B, the display control unit 103a brings the check box into a non-selected state.

The processing execution unit 103b switches processing to be executed on the corresponding image according to the selection/non-selection state of the check box. That is, when the check box corresponding to an image is changed from a non-selected state to a selected state, this change is accepted as an indication that the image has been selected as an import target image and the image is put into a transfer queue. On the contrary, when the check box corresponding to an image is changed from a selected state to a non-selected state, the selection state of the image is canceled and the image is deleted from the transfer queue. The transfer queue is arranged in the SDRAM.

The processing execution unit 103b, when the import start button 2 is pressed down by the user, acquires the image file of the image registered in the transfer queue from the digital camera connected to the image storage device 100 through the communication device 102. In the example shown in FIG. 2, four images displayed in an upper row are selected as import target images but four images displayed in a lower row are not selected as import target images.

The display control unit 103a changes the display content in the check box according to the state of execution of processing by the processing execution unit 103b. To be concrete, the display control unit 103a displays a mark indicting that transfer of the image file concerned is in progress in the check box corresponding to the image, of which import from the digital camera connected to the image storage device 100 has been started. In the case of the wireline connection, the display control unit 103a displays a wireline-transfer-in-progress mark 3b indicating that an image file is being transferred through a wireline connection as shown in FIG. 3 in the check box corresponding to the image. In the case of a wireless connection, the display control unit 103a displays a wireless-transfer-in-progress mark 3c indicating that an image file is being transferred through a wireless connection as shown in FIG. 3 in the check box corresponding to the image.

The information on whether the image storage device 100 and the digital camera are connected through a wireline connection or through a wireless connection is acquired when communication is established between the image storage device 100 and the digital camera, and the acquired information is stored in the SDRAM. The display control unit 103a reads in the information stored in the SDRAM to determine whether the image storage device 100 and the digital camera are connected through a wireline connection or through a wireless connection, and displays the wireline-transfer-in-progress mark 3b or the wireless-transfer-in-progress mark 3c correspondingly.

When the import of the image file is completed, the display control unit 103a displays a transfer completion mark 3d indicating that transfer of the image file has been completed in the check box corresponding to the image. The user can understand the status of execution of the processing, that is, the status of transfer of the image file according to the mark displayed in the check box.

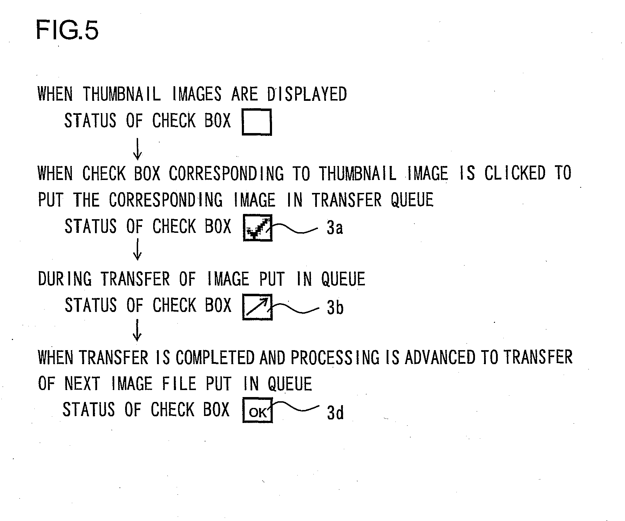

FIG. 5 is a diagram exemplifying a change in the display content in a check box according to the status of execution of the processing. When the thumbnail images are displayed on the image list displaying screen, the check boxes are each in a non-selected state. Thereafter, when one or more check boxes are clicked by the user, the transfer target mark 3a is displayed in the check box or boxes. Then the check box or boxes are in a selected state. The selected image or images are put into the transfer queue.

When the import start button 2a is pressed down by the user to start transfer of the image file of the image corresponding to the check box, the wireline-transfer-in-progress mark is indicated in the check box. On the other hand, when the transfer of the image file is completed, the transfer completion mark 3d is displayed in the check box.

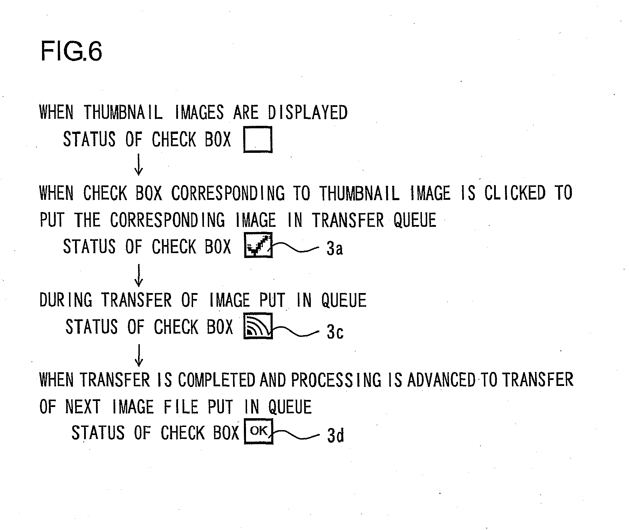

FIG. 6 is a diagram exemplifying a change in the display content in the check box according to the status of execution of the processing in the import of an image file from the digital camera wireless-connected to the image storage device 100. The example shown in FIG. 6 differs from the example shown in FIG. 5 in that in the example shown in FIG. 6, the wireless-transfer-in-progress mark 3c is displayed in the check box when the transfer of an image file is started.

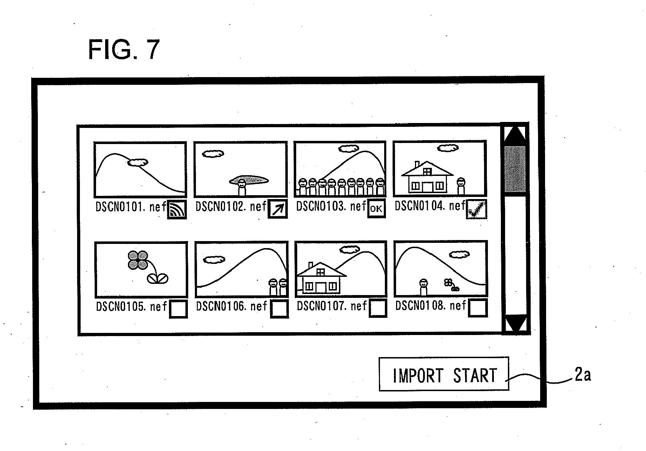

FIG. 7 is a diagram illustrating an example of the image list displaying screen after the transfer of the image file is started by pressing the import start button 2a. In the example shown in FIG. 7, the status of execution of the processing, that is, status of progress of transfer of each of the four images in the upper row selected as import target images on the image list displaying screen shown in FIG. 2 can be grasped by the respective display contents in the check boxes.

To be concrete, Fig. 7 shows that an image file having a file name of DSCN0101.nef is currently being transferred from the digital camera wireless-connected whereas an image file having a file name of DSCN0102.nef is currently being transferred from the digital camera wireline-connected. In addition, FIG. 7 shows that transfer has already been completed for an image file having a file name of DSCN0103.nef and transfer of an image file having a file name of DSCN0104.nef has not started yet.

The processing execution unit 103b, when import of an image has started and it is detected that the check box has been clicked by the user, changes the processing to be executed on the image corresponding to the image according to the current display content in the check box. The display control unit 103a changes the display content in the check box to a mark that represents the status of execution of the processing after it is changed by the display control unit 103b.

To be concrete, when the check box in a non-selected state like the images in the image list displaying screen shown in FIG. 7 is clicked by the user, the processing control unit 103b puts the image corresponding to the check box concerned into transfer queue. The display control unit 103a, as shown in FIG. 4A, displays the transfer target mark 3a in the check box to bring the check box into a selected state.

On the contrary, when the check box in a selected state like the image filehaving a file name of DSCN0104.nef is clicked by the user, the processing control unit 103b deletes the image corresponding to the check box from the transfer queue. Then, the display control unit 103a, as shown in FIG. 4B, deletes the transfer target mark 3a in the check box to bring the check box into a non-selected state.

When the check box on which the transfer completion mark 3d is displayed, such as the check box corresponding to the image file having a file name of DSCN0103.nef, is clicked by the user, the processing control unit 103b puts the image corresponding to the check box into the transfer queue. That is, the processing corresponding to the image is changed, so that the image file of which transfer has already been completed can be imported again. The display control unit 103a, as shown in FIG. 4C, changes the display content in the check box from the transfer completion mark 3d to the transfer target mark 3a.

When the check box on which the wireline-transfer-in-progress mark 3b is displayed, such as the check box corresponding to the image file having a file name of DSCN0102.nef, is clicked by the user, the processing control unit 103b stops transfer of the image corresponding to the check box. The display control unit 103a, as shown in FIG. 4D, deletes the wireline-transfer-in-progress mark 3b in the check box to bring the check box into a non-selected state.

Similarly, when the check box on which the wireless-transfer-in-progress mark 3c is displayed, such as the check box corresponding to the image file having a file name of DSCN0101.nef, is clicked by the user, the processing control unit 103b stops transfer of the image corresponding to the check box. The display control unit 103a, as shown in FIG. 4E, deletes the wireless-transfer-in-progress mark 3c in the check box to bring the check box into a non-selected state.

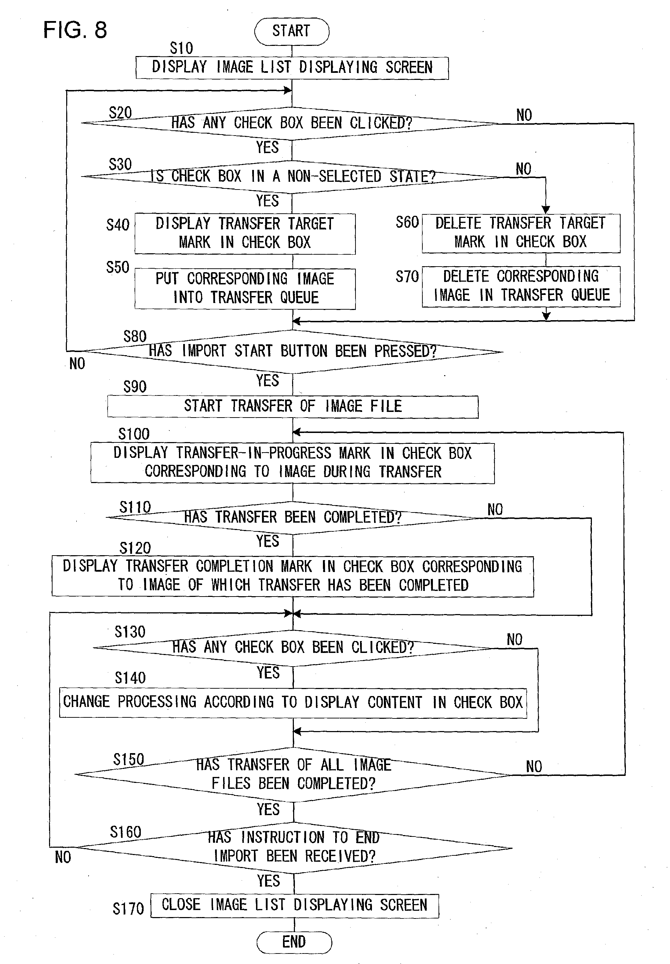

FIG. 8 is a flowchart illustrating the processing to be executed in the image storage device 100 according to the present embodiment. The processing illustrated in FIG. 8 is executed by the control device 103b as a program that is started up when an import of an image from the digital camera is instructed by the user.

In a step S10, the display control unit 103a displays the image list displaying screen as shown in FIG. 2 on the monitor 105. In a step S20, the display control unit 103a determines whether or not any check box on the image list displaying screen has been clicked by the user. If the result of the determination in the step S20 is NO, the process is advanced to a step S80. If the result of the determination in the step S20 is YES, the process is advanced to a step S30.

In the step S30, the display control unit 103a determines whether or not the check box clicked by the user is in a non-selected state. If the result of the determination in the step S30 is YES, the display control unit 103a, in the step S40, displays the transfer target mark 3a to bring the check box into a selected state. In a step S50, the processing execution unit 103b puts the image corresponding to the check box in a selected state into the transfer queue, and the process is advanced to a step S80.

If the result of the determination in the step S30 is NO, the display control unit 103a, in a step S60, deletes the transfer target mark 3 a in the check box to bring the check box into a non-selected state. In a step S70, the processing execution unit 103b deletes the image corresponding to the check box in a non-selected state, and the process is advanced to the step S80.

In the step S80, the processing execution unit 103b determines whether or not the import start button 2a has been pressed down by the user. If the result of the determination in the step S80 is NO, the process is turned back to the step S20 and the processing is repeated. If the result of the determination in the step S80 is YES, the processing execution unit 103b, in a step S90, starts transfer of the import target image from the digital camera.

In a step S100, the display control unit 103a displays the transfer-in-progress mark in the check box. That is, the display control unit 103a reads in the information stored in the SDRAM as mentioned above and determines whether or not the image storage device 100 and the digital camera are wireline-connected or wireless-connected. When an image file is being transferred through a wireline connection, the display control unit 103 displays the wireline-transfer-in-progress mark 3b in the check box corresponding to the image file. When the image file is being transferred through a wireless connection, the display control unit 103a displays the wireless-transfer-in-progress mark 3c in the check box corresponding to the image file.

In a step S110, the display control unit 103a determines whether or not transfer of the image file has been completed. If the result of the determination in the step S110 is YES, the display control unit 103a, in a step S120, displays the transfer completion mark 3d in the check box corresponding to the image file and the process is advanced to a step S130. If the result of the determination in the step S110 is NO, the process is advanced directly to the step S130.

In the step S130, the processing execution unit 103b determines whether or not any check box has been clicked by the user. If the result of the determination in the step S130 is YES, the processing execution unit 103b, in a step S140, changes the processing on the image corresponding to the check box according to the display content in the check box as mentioned above. The display control unit 103a changes the display content in the check box according to the result of the change of the processing, and the process is advanced to a step S150. If the result of the determination in the step S130 is NO, the process is advanced directly to the step S150.

In the step S150, the processing execution unit 103b determines whether or not transfer of image files of all the images which have been selected by the user on the image list displaying screen and of which the check boxes corresponding to the images are each in a selected state has been completed. If the result of the determination in the step S150 is NO, the process is turned back to the step S100 to repeat the processing. If the result of the determination in the step S150 is YES, the process is advanced to a step S160.

In the step S160, the processing execution unit 103b determines whether or not end of the import of the image from the digital camera is instructed by the user. If the result of the determination in the step S160 is NO, the process is turned back to the step S130 to repeat the processing. If the result of the determination in the step S160 is YES, the process is advanced to a step S170 and the display control unit 103a closes the image list displaying screen displayed on the monitor 105 to end the present processing.

As described above, the image storage device 100 is, for example, a personal computer. The processing execution program product according to the present invention is provided as data signals transmitted through a storage medium 200 (for example, CD-ROM) or a communication network 400 (for example, the Internet). The image storage device 100, which is a personal computer, is furnished with the processing execution program through the CD-ROM 200. Alternatively, the computer may be furnished with the processing execution program in the following manner. The image storage device 100, which is a personal computer, has a connect function of connecting with the communication network 400. A server device 300, which is a computer that provides the processing execution program, stores the processing execution program in a storage medium such as a hard disk. The computer 300 embodies on carrier waves the processing execution program read out from the hard disk as data signals and transfers the data signals to the personal computer 100 through the communication network 400. As mentioned above, it is preferred that the processing execution program is supplied as a computer program product in various forms including provision as data signals through the storage medium 200 or the communication network 400.

According to the present embodiment, the following advantages can be obtained.
(1) The display control unit 103a is configured to display a selection area on a screen for allowing the user to select an image in correlation to the image displayed on a screen, and the processing execution unit 103b is configured to accept a selection instruction on the selection area from the user and execute the processing on an image that corresponds to the selection area on which the selection instruction has been performed. The display control unit 103a is configured to display in the selection area either one of the status of selection/nonselection of image or images by the user and the status of execution of the processing by the processing execution unit 103b. With the above-mentioned configurations, it is unnecessary to provide a separate display area other than the selection area in order to display the status of selection/nonselection of images and the status of execution of the processing, so that the space on the screen can be saved.
(2) The processing execution unit 103b is configured such that when a selection instruction on the selection area is given by the user, the processing on an image corresponding to the selection area is changed according to the display content of the selection area at that time. This enables optimal processing to be executed depending on the status of execution of the processing on the image.
(3) The processing execution unit 103b is configured such that when the display content in the selection area indicates that the image corresponding to the selection area hasnotbeenselected, thatis, thecheckboxisinanon-selected state and if a selection instruction for the selection area is given by the user, accepts selection of the image corresponding to the selection area. This enables the user to select the import target image efficiently only by clicking the check box in a non-selected state.
(4) The processing execution unit 103b is configured such that when the display content of the selection area indicates that the image corresponding to the selection area has already been selected, that is, the transfer target mark 3a is displayed in the check box and if a selection instruction on the selection area is given by the user, cancels the selection of the image corresponding to the selection area. This enables the user to cancel the selected state efficiently only by clicking the check box that has already been selected.
(5) The processing execution unit 103b is configured such that when the display content in the selection area indicates that the processing on the image corresponding to the selection area is in progress, that is, the wireline-transfer-in progress mark 3b or the wireless-transfer-in-progress mark 3c is displayed in the check box and if a selection instruction on the selection area is given by the user, stops the transfer of the image corresponding to the selection area. This enables the user to stop the transfer efficiently only by clicking the check box corresponding to the image that is being transferred.
(6) The processing execution unit 103b is configured such that when the display content in the selection area indicates that the processing on the image corresponding to the selection area has been completed, that is, the transfer completion mark 3d is displayed in the check box, and if a selection instruction on the selection area is given by the user, puts the image corresponding to the selection area into the transfer queue again. This enables the user to instruct retransfer efficiently only by clicking the check box corresponding to the image that has already been transferred.
(7) The selection area is configured to be a check box. This enables the user to select images intuitively by clicking the check box.

### -Modification-

The image storage device according to the above-mentioned embodiment may be modified as follows.
(1) In the above-mentioned embodiment, explanation has been made on the example in which the processing execution unit 103b is configured to put an image into the transfer queue when the check box corresponding to the image is brought into a selected state, and starts transfer of the image when the transfer start button 2a is pressed down by the user. However, the processing execution unit 103b may also be configured such that when a check box is brought into a selected state, the processing execution unit 103b puts the image corresponding to the check box into the transfer queue and start transfer of the image.
(2) In the above-mentioned embodiment, explanation has been made on the example in which the display control unit 103a is configured to display a check box in relation to each image on the image list displaying screen and to display the status of selection/nonselection of images by the user and the status of execution of the processing in the check boxes. However, the selection area is not limited to check boxes and the display control unit 103a may also be configured to display an icon or a button in correlation to each image and to select an import target image when the user clicks the icon or button. The display control unit 103a may be configured to change the display content of the icon or button depending on the status of selection/nonselection of the image or the status of execution of the processing.
(3) In the above-mentioned embodiment, explanation has been made on the example in which the processing execution unit 103b is configured to accept, when the image storage device acquires an image from the digital camera, a selection instruction by the user on a check box corresponding to the image on the image list displaying screen and the display control unit 103a is configured to display the status of selection/nonselection of images and the status of execution of the transfer processing in the check box. However, the present invention is also applicable to a case where the user selects an image on which the processing is to be performed and gives an instruction to execute another processing on the image. For example, the control device 103 may be configured such that when the format of the image that has already been stored in the HDD 104 in the image storage device 100 is to be converted to a different one and if the user selects an image that is a target of format conversion and gives a selection instruction on the selected image for execution of the format conversion processing, the display control unit 103a displays the status of selection/nonselection of images and the status of execution of the format conversion processing in the check box.
(4) In the above-mentioned embodiment, explanation has been made on the example in which a personal computer is used as the image storage device 100. However, other information devices, for example, a file server device, a digital camera and a dedicated device may be used. The present invention is also applicable to a casewhere a plurality of digital cameras are communicable to each other, and one digital camera is used as the image storage device 100 and imports an image file from another digital camera. In this case, a liquidcrystal monitor mounted on the back side of the digital camera may be used as the monitor 105. The user can confirm the status selection of images and the status of execution of the processing by viewing the display content of the check boxes on the image list displaying screen displayed on the liquid crystal monitor.
(5) In the above-mentioned embodiment, explanation has been made on the example in which the object to be selected by the user is an image and the processing of which execution is instructed by the user is processing to transfer the image. However, the object of selection is not limited to images and may be, for example, video data or sound data. The content of the processing is not limited to transfer processing and may be replay processing of video data or sound data. In this case, it may be configured such that the video data or sound data to be replayed are selected by clicking a check box corresponding thereto by the user and the status of selection/nonselection and status of replay thereof are displayed in the check box.

The above described embodiments are examples, and various modifications can be made without departing from the scope of the invention.

## Claims

1. A computer readable computer program product containing a processing execution program, the processing execution program comprising:
an area display instruction to display, in correlation to data displayed on a screen, a selection area to be operated by a user for selecting the data;
a selection status display instruction to display a selection status indication indicating that the data has been selected in the selection area;
a processing execution instruction to execute the processing to the data corresponding to the selection area in which the selection status indication is displayed; and
an execution status display instruction to display an execution status indication on the processing in place of the selection status indication in the selection area.

2. A processing execution program product according to claim 1, wherein the processing execution program further comprising:
a processing control instruction to control the processing on the data corresponding to the selection area to be changed according to a display content of the selection area when the selection area is operated by the user.

3. A processing execution program product according to claim 2, wherein
the processing control instruction controls the processing according to the processing execution instruction to be changed such that when the display content of the selection area indicates that the data corresponding to the selection area is not selected, and if the selection area is operated by the user, the data corresponding to the selection area is selected.

4. A processing execution program product according to claim 2 or claim 3, wherein
the processing control instruction controls the processing according to the processing execution instruction to be changed such that when the display content of the selection area indicates that the data corresponding to the selection area is selected, and if the selection area is operated by the user, selection of the data corresponding to the selection area is cancelled.

5. A processing execution program product according to any one of claims 2 through 4, wherein
the processing control instruction controls the processing execution instruction such that when the display content of the selection area indicates that the processing execution instruction is executing the processing on the data the data corresponding to the selection area, and if the selection area is operated by the user, the processing on the data corresponding to the selection area is stopped.

6. A processing execution program product according to claim 2, wherein
the processing control instruction controls the processing execution instruction such that when the display content of the selection area indicates that the processing on the data corresponding to the selection area has been completed, and if the selection area is operated by the user, the processing on the data corresponding to the selection area is executed again.

7. A processing execution program product according to any one of claims 1 through 6, wherein
a display format of the selection area is a check box.

8. A processing execution apparatus comprising:
an area display control means that controls a selection area to be displayed in correlation to data displayed on a screen, the selection area being to be operated by a user for selecting the data;
a selection status display control means that controls a selection status indication indicating that the data has been selected to be displayed in the selection area;
a processing execution means that executes processing on the data corresponding to the selection area in which the selection status indication is displayed; and
an execution status indication control means that controls such that the an execution status indication on the processing in place of the selection status indication is displayed in the selection area.
